# EUROPEAN PATENT SPECIFICATION

(11) **EP 1 923 886 B1**
(45) Date of publication and mention of the grant of the patent: **21.10.2009**
(21) Application number: 06023768.2
(22) Date of filing: 15.11.2006
(51) Int. Cl.: G11B 23/00, G11B 17/028

(54) **Eco disc**
EcoDisc
Disque éco

(43) Date of publication of application: 21.05.2008
(73) Proprietor: ODS Technology GmbH, 23942 Dassow (DE)
(72) Inventor: Nute, Roger, 49490 Chigné (FR); Fetouhi, Al, 77100 Nanteuil-lès-Meaux (FR)
(74) Representative: Peterreins, Frank

(56) References cited:
- EP-A- 1 396 855
- EP-A2- 1 291 874
- JP-A- 1 064 163
- JP-A- 8 167 272
- JP-A- 9 017 079
- US-A- 5 999 513
- US-A1- 2002 075 794

## Description

### Field and background of the invention:

The present invention relates to a recording medium, in particular to an optical recording medium including a substrate and a signal recording layer provided on the substrate.

As one of the conventional recording media for audio, video and/or other information, optical discs such as CDs and DVDs, from which recorded information is read using a light beam or to which information is written using a light beam, are widely used. Since such an optical disc is formed from a single plate-like substrate, it can easily be handled and has a larger storage capacity than other recording media such as magnetic tapes, etc.. Therefore, the optical discs are widely used as media for recording audio and video information, computer-processed data, etc. Recording media for audio, video and/or other information, such as CDs and DVDs are e.g. known from US 5,541,910, US 5,864,534, US 6,002,663, US 6,252,842 and US 2004/00434154 A1.

Information processing units, such as computers, CD/DVD players, digital cameras and video cameras, have been designed more and more compact with an increasingly smaller internal space of installation for a recording and/or reproducing apparatus using an optical recording medium such as an optical disc or the like. Accordingly, optical discs are also known in the prior art, e.g. from US 2004/0228263 A1, which only have a diameter of 65 mm or less.

US 2004/0228263 A1 discloses an optical disc having a thickness of only 0.4 mm to 0.7 mm, i.e. significantly thinner than conventional optical discs which have a thickness of about 1.2 mm. Such optical discs are also called light weight optical discs (LODs) or thin video discs (TVDs). With this measure it is achieved to reduce the amount of material which is necessary for manufacturing an optical disc and thus to significantly reduce the manufacturing costs. However, in the area around the axis of the optical disc described in US 2004/0228263 A1 - the so called clamping area -, the substrate has a thickness of 1.2 mm, because this distance is prescribed for conventional recording and/or reproducing devices (e.g. drives for computers or CD/DVD players).

At present, a disc must meet the requirements of the "standard physical product" as defined in the Red Book standard, particularly in terms of deflection of the beam incident to the surface of the reflective plan and thus consistency of performance of the disc for the end user. The optical disc disclosed in US 2004/0228263 A1 has the drawback that in many cases the shape of the recording area is not within the prescribed tolerances. As a result, this optical disc is not a reliable recording medium for all types of disc cartridges e.g. for computers, CD/DVD players, digital cameras and video cameras, in particular because the disc cartridges of the various manufacturers are not completely standardized.

### Objects and summary of the invention:

It is an object of the present invention to provide a novel light weight optical recording medium which has an increased reliability. In particular, the novel optical recording medium should meet the prescribed tolerances of various types of recording and/or reproducing devices so that problems concerning playability are reduced or avoided.

It is another object of the present invention to provide a novel light weight optical recording medium which can reliably be removed from most or any recording and/or reproducing devices. Further, the recording medium should not present any problems to most or any packaging devices.

These objects are achieved by an optical recording medium as defined in claim 1. The dependent claims depict advantageous embodiments of the invention.

Trials in the prior art with optical recording discs having a reduced thickness in the area of the recording layer compared to common DVDs or CDs (having a thickness of about 1.2 mm) were not successful, because of the reduced stiffness and/or reduced shape stability of the discs. Therefore, the reliability of such disc was not satisfying (i.e. the discs could not be played on all types of players available on the market). However, with the optical recording medium according to the present invention, this drawback is significantly reduced or even completely avoided, because the stiffness is increased in the clamped state of the optical recording medium due to the deformation of or the tension in the medium. Thus, the inventive optical recording medium compensates the reduced stiffness of the thin recording medium by means of the deformation/tension. In the same manner, a thin sheet of paper which has a very low shape stability per se, may gain a significant stability if a tension is applied or if a deformation is applied (e.g. in the hand of a lecturer).

In a preferred embodiment of the invention, the optical recording medium is a disk having the general shape of a cone or of an umbrella when the optical recording medium is in an unclamped state, with an small angle α between a surface of the optical recording medium and a plane which is perpendicular to the axis A of the optical recording medium. The angle α is preferably greater than 0.5°, in particular in the range between 0.8° and 3°, when the disc is in an unclamped state. In case of an umbrella shape, the mentioned angles are maximum angles which occur at the outer edges of the disc. In the clamped stated of the disk, the angle α is reduced. A similar effect is given with the wings of a jumbo jet which are lifted when the jet is flying.

With this preferred embodiment of the invention, the deformation of or tension in the optical recording medium preferably results in that the optical recording medium adopts a generally flat shape, in particular if the optical recording medium is clamped in the clamping area by a force of 0.3 to 5 N, in particular by a force of 0.5 to 2.5 N.

The first ring has a height T₃ which is slightly greater than the height T₄ of the second ring. When both rings are pressed down to a flat surface of a clamping means, the (outer) first ring touches the surface first, and then - by increasing the clamping force - the (inner) second ring also touches the surface so that the inner edge of the optical recording medium is deformed downwardly with respect to the area at the (outer) first ring. At the same time, the outer edges of the optical recording medium are lifted, because the (outer) first ring acts like a jacking/bearing area. As a result, the conical/umbrella shape of the optical recording medium may achieve an almost flat shape in its outer area (in particular in the area of the recording layer) with high shape stability.

In addition, the optical recording medium may have a third ring on a second side of the optical recording medium which extends at least in the inner section of the clamping area of the optical recording medium, as well as a fourth ring on the second side of the optical recording medium which extends at least in the outer section of the clamping area of the optical recording medium. Again, instead of the third ring and the fourth ring, third and fourth protrusions may be provided for achieving the same effect.

### Brief description of the drawings:

Fig. 1 shows a partial cross-sectional view of a known DVD-5;
Fig. 2 shows a partial cross-sectional view of a known DVD-9;
Fig. 3 shows a partial cross-sectional view of a known DVD-10;
Fig. 4 shows a partial cross-sectional view of a known CD;
Figs. 5 and 6 show microscope pictures of a recording layer of a CD and of a DVD, respectively;
Fig. 7 shows a cross-sectional view of an optical recording medium according to a first embodiment of the present invention;
Figs. 8a and 8b show a cross-sectional view of the optical recording medium according to a second embodiment of the present invention in its unclamped and its clamped state;
Figs. 9a and 9b show a cross-sectional view of the optical recording medium according to a third embodiment of the present invention in its unclamped and its clamped state;
Figs. 10a and 10b show a cross-sectional view of an optical recording medium in its unclamped and its clamped state;
Fig. 11 a shows a partial cross-sectional view of a known CD with a laser beam focused on the recording layer;
Fig. 11b shows a partial cross-sectional view of a known DVD with a laser beam focused on the recording layer;
Fig. 11c shows a partial cross-sectional view of an optical recording medium according to the first embodiment of the present invention with a laser beam focused on the recording layer;
Fig. 12 is a schematic drawing of a laser focusing mechanism and a photo diode for reading an optical recording medium; and
Fig. 13 shows a partial view of a clamping mechanism of a disc drive.

### Detailed description of the invention:

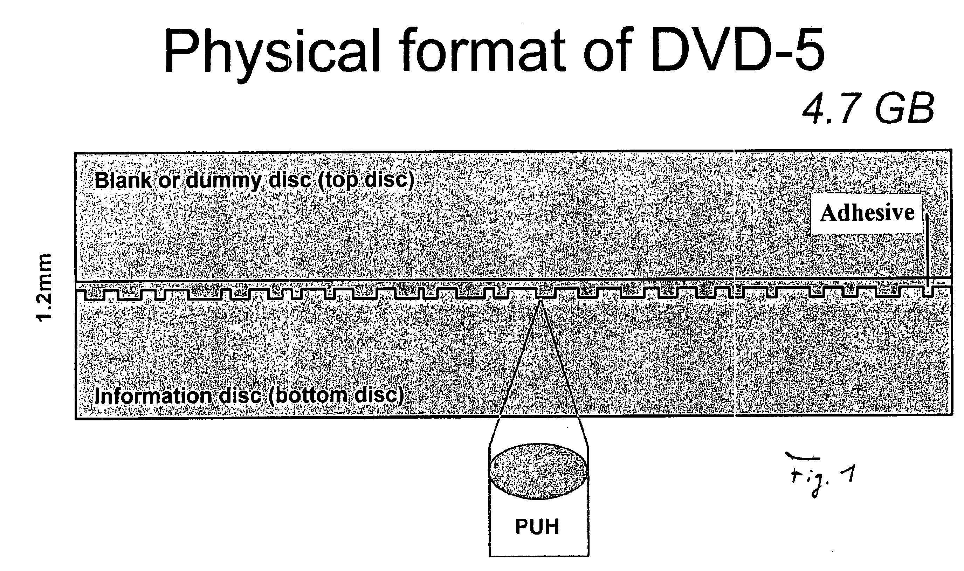

For a full understanding of the invention, the physical formats of DVDs and CDs according to the state of the art are discussed in the following. **Fig.** 1 shows a partial cross-sectional view of a known DVD-5. A DVD-5 comprises an information disc (bottom disc) **1** and a blank or dummy disc (top disc) **2** both made of polycarbonate and bonded together by a resin layer **4.** The upper surface of the information disc is structured and carries a recording layer **3** made of aluminum. The recording layer **3** forms so-called pits and lands which correspond to the data stream stored on the DVD-5 (the total storage capacity of a DVD-5 is 4.7 GB). The total thickness of a DVD-5 is about 1.2 mm, wherein the thickness of the information disc **1** has a thickness of about 0.6 mm so that the recording layer 3 is positioned with a distance of about 0.6 mm from the outer surface of the information disc **1.** For reading the data stream stored on the DVD-5, a laser beam **5** is focused on the recording layer **3.**

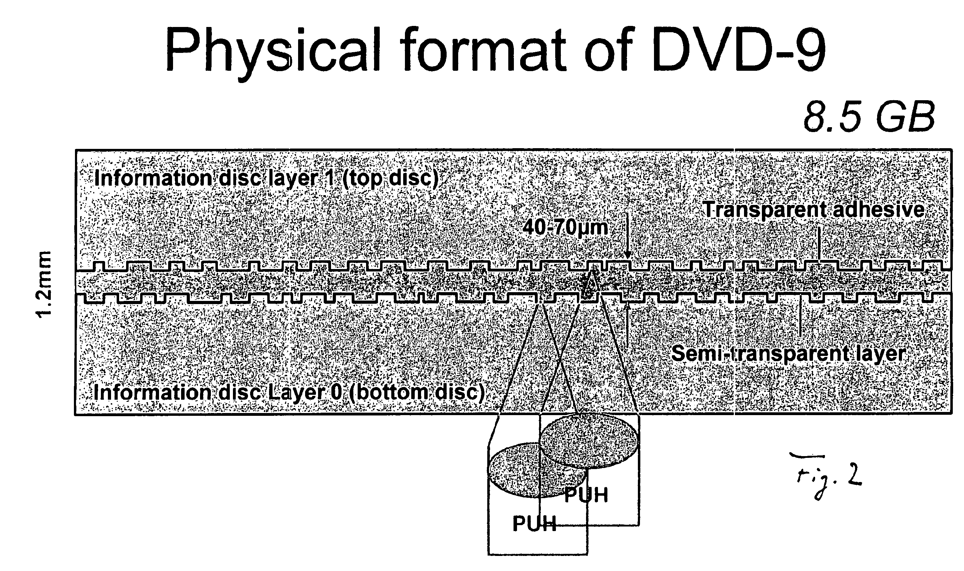

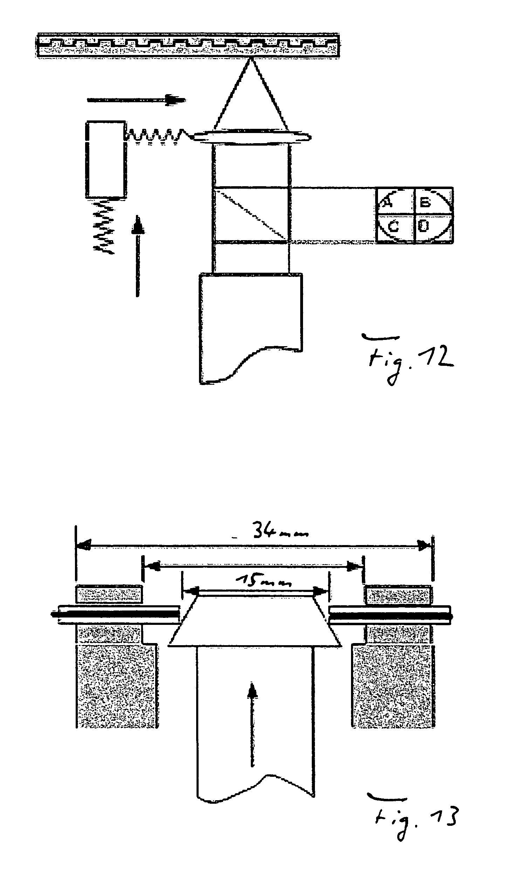

**Fig. 2** shows a partial cross-sectional view of a known DVD-9 having a total storage capacity of 8.5 GB and a total thickness of also 1.2 mm. A DVD-9 has two information discs **1** and **1'** with two recording layers **3** and **3'**. The first (lower) recording layer **3'** is semi-transparent so that the laser beam can alternatively be focused on the first (lower) or the second (upper) recording layer from the bottom side. For this purpose, a transparent adhesive is used for bonding the information discs together. Further, the laser beam system or the convection lens system of the laser is adjustable so that the focus of the laser beam is located on the desired recording layer. A schematic drawing of such a focusing mechanism 6 for a laser 7 is shown in Fig. **12****.** The laser beam is reflected by the recording layer and is then directed by a semi-permeable mirror to a photo diode **8**.

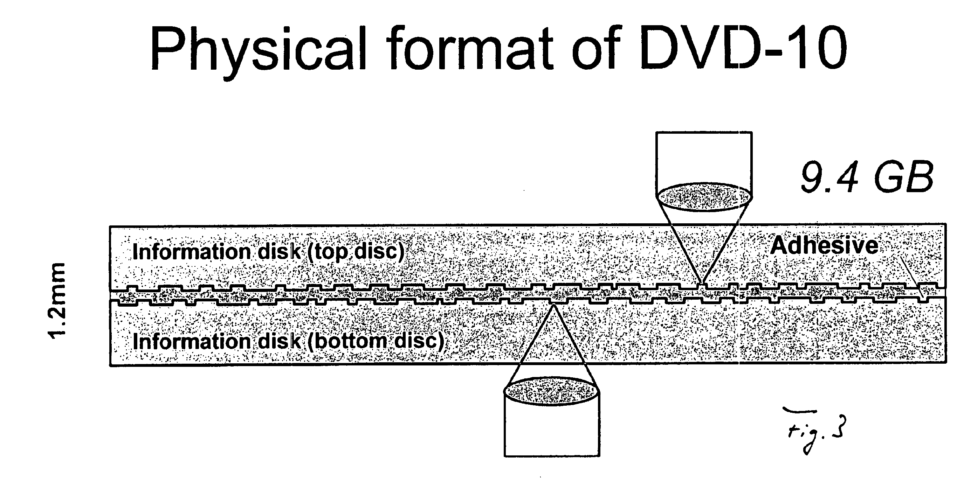

**Fig. 3** shows a partial cross-sectional view of a known DVD-10 having a total storage capacity of 9.4 GB and a total thickness of also 1.2 mm. The physical format is similar to a DVD-9. However, the (second) upper recording layer 3' is read by a second laser beam **5'** which is arranged on the side of the second (upper) information disc (opposed to the first laser beam **5).**

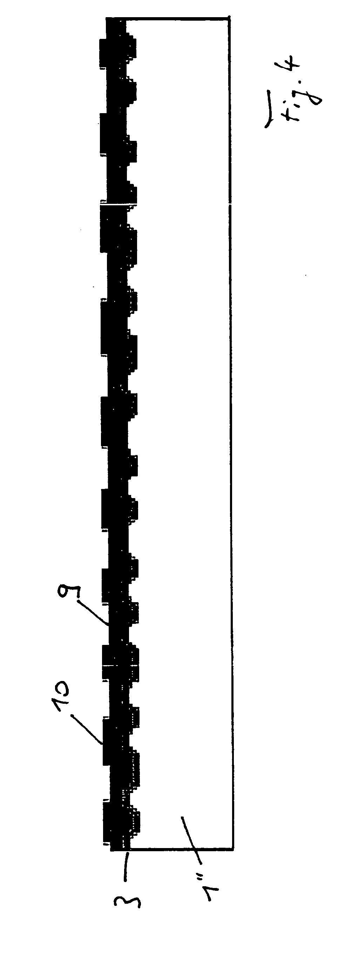

Finally, **Fig. 4** shows a partial cross-sectional view of a known CD which only comprises one disc **1"** made of polycarbonate. The recording layer **3** is only covered by a protective lacquer **9** which usually carries a printed layer **10.** The total thickness of a CD is again about 1.2 mm. However, the recording layer is not positioned in the center of the recording medium (between two discs), but at the top the recording medium. Therefore, the distance from the lower surface of the disc 1" to the recording layer **3** is about 1.0 mm to about 1.15 mm. Since the CD is identically positioned within the drive like a DVD (in case of a combinational drive which is suitable for DVDs and CDs), the focusing mechanism 6 must be suitable to focus the laser beam to the height of the recording layer of the CD which is higher than the recording layer(s) of a DVD.

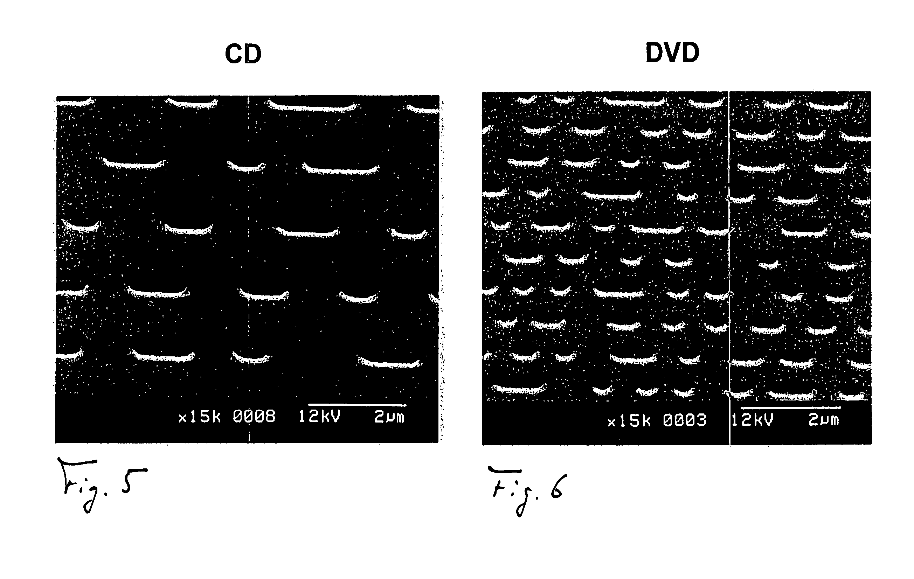

In this context, it has to be noted that a laser for reading a DVD has a wavelength of about 650 nm, and a laser for reading a CD has a wavelength of about 780 nm. Therefore, a combinational drive which is suitable for DVDs and CDs needs to have two lasers for providing these two wavelengths. The reason why different wavelengths are necessary is that the height difference between pits and lands of the recording layer are different for DVDs and for CDs. This height difference must be about λ/4, i.e. 650nm/4 (+/- 4%) for a DVD, and 780nm/4 (+/- 4%) for a CD. In addition, the pit and land structure of a DVD is significantly smaller compared to a CD, as can be seen in **Figs. 5 and 6** which show microscope pictures of a recording layer of a CD and of a DVD, respectively.

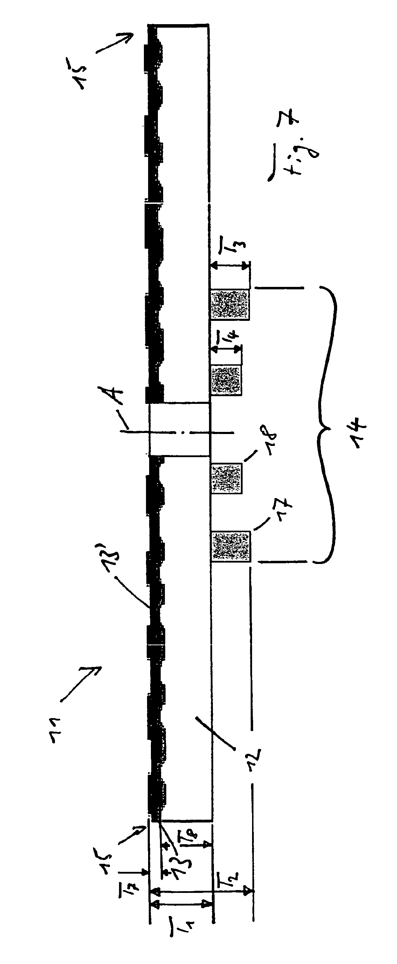

**Fig. 7** shows a (schematic) cross-sectional view of an optical recording medium according to a first embodiment of the present invention. The optical recording medium comprises an information disc or a substrate **12** and a recording layer **13** arranged on one side of the substrate **12,** wherein the optical recording medium has a predetermined clamping area **14.** The recording layer **13** is covered by a lacquer layer **13'.** The clamping area **14** is formed such as to achieve a deformation of or a tension in at least a part of the optical recording medium **11** when it is clamped within a recording and/or reproducing device. In particular, the deformation or tension is present in an area or in the entire area of the optical recording medium which is located outside of the clamping area **14.** The deformation or tension preferably results in a change of the relative position of the outer edges **15** of the optical recording medium with respect to the clamping area. As a result, the optical recording medium may have a thinner thickness in the area of the recording layer (outside of the clamping area) of - for example - only about 0.6 mm or even less. In particular, the thickness **T₁** of the optical recording medium in an area outside of the clamping area is in the range between 0.4 to 0.7 mm. However, it is to be understood that the invention is not limited to a specific thickness of the optical recording medium. Also a total thickness T₂ of the optical recording medium in the outer section of the clamping area **14** of about 1.2 mm is possible.

Trials in the prior art with optical recording discs having a reduced thickness in the area of the recording layer compared to common DVDs or CDs (having a thickness of about 1.2 mm) were not successful, because of the reduced stiffness and/or reduced shape stability of the discs. Therefore, the reliability of such disc was not satisfying (i.e. the discs could not be played on all types of players available on the market). However, with the optical recording medium according to the present invention, this drawback is significantly reduced or even completely avoided, because the stiffness is increased in the clamped state of the optical recording medium due to the deformation of or the tension in the medium. Thus, the inventive optical recording medium compensates the reduced stiffness of the thin recording medium by means of the deformation/tension. In the same manner, a thin sheet of paper which has a very low shape stability per se, may gain a significant stability if a tension is applied or if a deformation is applied (e.g. in the hand of a lecturer).

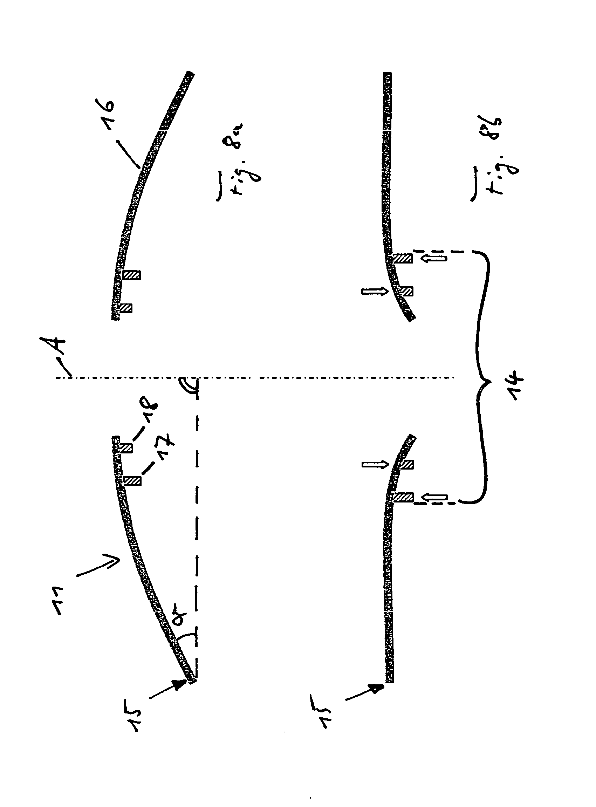

**Figs. 8a and 8b** show a cross-sectional view of the optical recording medium according to a second embodiment of the present invention in its unclamped and its clamped state. According to this embodiment of the invention, the optical recording medium is a disk having the general shape of a cone or of an umbrella **16** when the optical recording medium is in an unclamped state, with an small angle α between a surface of the optical recording medium and a plane which is perpendicular to the axis A of the optical recording medium. The angle α is preferably greater than 0.5°, in particular in the range between 0.8° and 3°, when the disc is in an unclamped state (i.e., the schematic drawings in **Figs 8a and 8b** are exaggerating the angle dimension). In case of an umbrella shape (as shown), the mentioned angles are maximum angles which occur at the outer edges **15** of the disc. In the clamped stated of the disk, the angle α is reduced. A similar effect is given with the wings of a jumbo jet which are lifted when the jet is flying.

With this preferred embodiment of the invention, the deformation of or tension in the optical recording medium preferably results in that the optical recording medium adopts a generally flat shape, in particular if the optical recording medium is clamped in the clamping area by a force of 0.3 to 5 N, in particular by a force of 0.5 to 2.5 N.

From a structural point of view, the above effects can be achieved - as shown in **Figs. 7****,** **8a and 8b** **-** by an optical recording medium which having a first ring **17** on a first side of the optical recording medium which extends at least in the outer section of the clamping area **14** of the optical recording medium. According to the present DVD/CD standard, the clamping area is defined by an area located within a radius of about 16 or 17 mm with respect to the axis of the optical recording medium (the diameter of the clamping area is less than about 34 mm, in particular less than about 28 mm). A typical clamping mechanism is - for example - shown in **Fig. 13****.** Alternatively, the optical recording medium comprises one or more first protrusions on a first side of the optical recording medium located in the outer section of the clamping area 14 of the optical recording medium.

In order to limit the maximum deformation/tension in the disc, it is preferred to provide a second ring **18** on the first side of the optical recording medium which extends at least in the inner section of the clamping area **14** of the optical recording medium. Alternatively, the optical recording medium comprises one or more second protrusions on the first side of the optical recording medium located in the inner section of the clamping area 14 of the optical recording medium.

The first ring **17** has a height T₃ which is slightly greater than the height **T₄** of the second ring **18.** When both rings are pressed down to a flat surface of a clamping means, the (outer) first ring touches the surface first, and then - by increasing the clamping force - the (inner) second ring also touches the surface so that the inner edge of the optical recording medium is deformed downwardly with respect to the area at the (outer) first ring **17.** This situation is shown in **Fig. 8b****.** At the same time, the outer edges of the optical recording medium are lifted, because the (outer) first ring **17** acts like a jacking/bearing area. As a result, the conical/umbrella shape **16** of the optical recording medium may achieve an almost flat shape in its outer area (in particular in the area of the recording layer) with high shape stability.

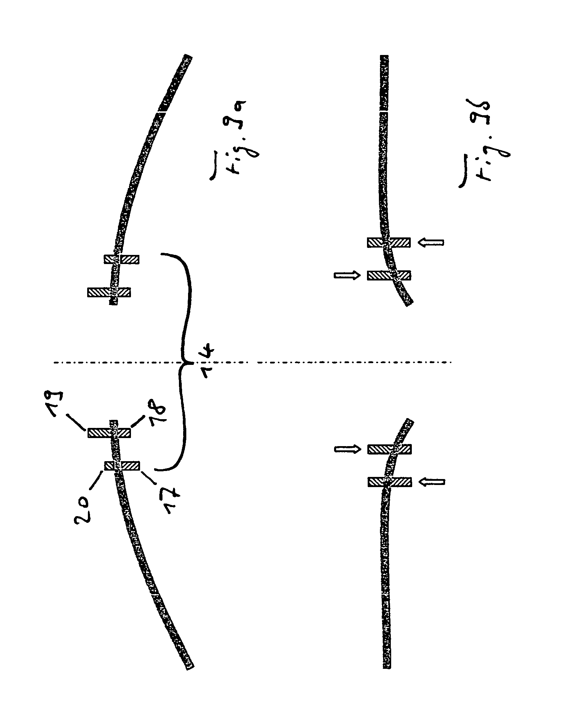

**Figs. 9a and 9b** show a cross-sectional view of the optical recording medium according to a third embodiment of the present invention in its unclamped and its clamped state. The optical recording medium according to this embodiment has a third ring **19** on a second side of the optical recording medium which extends at least in the inner section of the clamping area **14** of the optical recording medium, as well as a fourth ring **20** on the second side of the optical recording medium which extends at least in the outer section of the clamping area **14** of the optical recording medium. Again, instead of the third ring and the fourth ring, third and fourth protrusions may be provided for achieving the same effect.

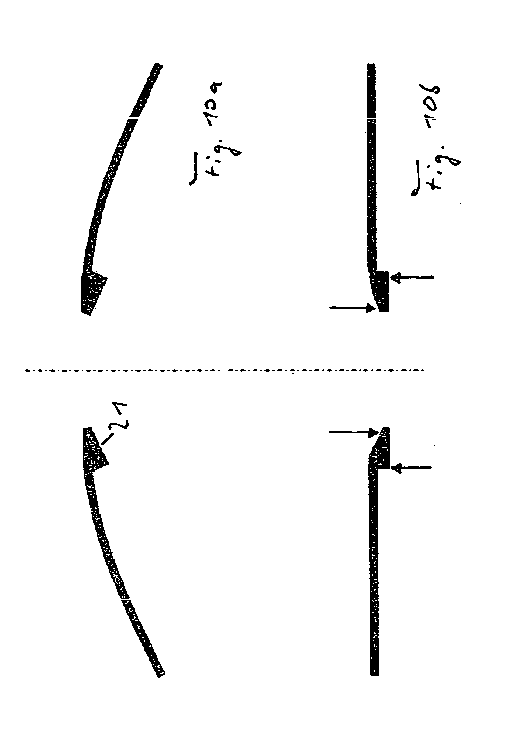

**Figs. 10a and 10b** show a cross-sectional view of an optical recording medium in its unclamped and its clamped state. In this example, the jacking/bearing effect is achieved with a clamping area **14** having a conically shaped surface **21** on a first side of the optical recording medium such that the total thickness of the optical recording medium reduces from the outer section of the clamping area **14** to the inner section of the clamping area **14.**

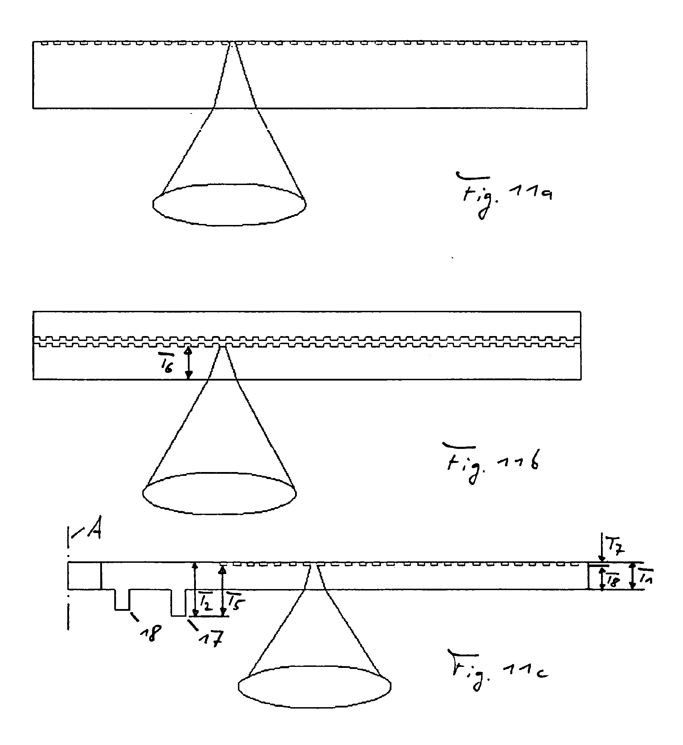

The mechanical aspects of the invention described above can be achieved with all possible layer structure of the optical recording medium. However, it is advantageous for all embodiments of the present invention to provide - according to a further aspect of the invention - a DVD as optical recording medium with a layer structure as will be described in context with **Fig. 11c****.**

As stated before, the recording layer(s) of a DVD according to the state of the art is/are arranged in its center (see also **Fig. 11b** showing a partial cross-sectional view of a known DVD with a laser beam focused on the recording layer). Contrary to that, the recording layer of a CD according to the state of the art is arranged at the top (see also **Fig. 11a** showing a partial cross-sectional view of a known DVD with a laser beam focused on the recording layer). According to the present invention, it is advantageous to provide a DVD with a layer structure of a CD, i.e. to arrange the recording layer at the top of a DVD according to the present invention as shown in **Fig. 11c****.** Such a layer arrangement is not known in the prior art, because laser beam of DVD drives is focused to a distance of **T₆** (of about 0.6 mm) with respect to the lower surface of the disc, wherein the position of this lower surface is defined by the clamping mechanism. However, in case of the situation as shown in Fig. **11c****,** the distance **T₅** of the lowest part of the disc to the recording layer is significantly greater than T₆, namely between 1.0 mm and 1.2 mm, in particular about 1.1 mm. Many commercially available drives which are only suitable for reading DVDs have no height adjustment mechanism as shown in **Fig. 12****.** Therefore, a DVD shown in Fig. 11c can not be read with such DVD drives, because the recording layer is at a height of about 1.1 mm (and not 0.6 mm).

Nevertheless, the inventive DVD shown in **Fig. 11c** can be read with a drive which is suitable for reading DVDs and CDs, because such drives have a height adjustment mechanism as shown in **Fig. 12****.** As a result, the inventive DVD of **Fig. 11c** has a recording layer positioned at a height as the recording layer of a CD, and can only be read with a drive with a 650 nm laser which is or can be focused on this recording layer.

## Claims

1. Optical recording medium comprising a substrate (12) and a recording layer (13) arranged on one side of the substrate (12), wherein the optical recording medium has a predetermined clamping area (14), the clamping area (14) of the optical recording medium is formed such as to achieve a deformation of or a tension in at least a part of the optical recording medium which is located outside of the clamping area and which results in that the optical recording medium having a conically shaped surface adopts a generally flat shape when it is clamped within a recording and/or reproducing device **characterized in that**
a first ring or protrusions (17) located in an outer section of the clamping area having a first height (T3) and a second ring or protrusions located in an inner section of the clamping area (18) having a second height (T4) wherein the first height (T3) is slightly greater than the second height (T4).

2. Optical recording medium according to claim 1, **characterized in that** the deformation or tension is present in the entire area of the optical recording medium which is located outside of the clamping area (14).

3. Optical recording medium according to one of the preceding claims, **characterized in that** the deformation or tension results in a change of the relative position of the outer edges (15) of the optical recording medium with respect to the clamping area.

4. Optical recording medium according to one of the preceding claims, **characterized in that** the optical recording medium is a disk having the general shape of a cone (16) when the optical recording medium is in an unclamped state, with an angle (α) between a surface of the optical recording medium and a plane which is perpendicular to the axis (A) of the optical recording medium.

5. Optical recording medium according to claim 4, **characterized in that** the the angle (α) is reduced when the disk in a clamped state.

6. Optical recording medium according to claim 4 or 5, **characterized in that** the angle (α) is greater than 0.5°, in particular in the range between 0.8° and 3°, when the optical recording medium is in an unclamped state.

7. Optical recording medium according to claim 6, **characterized in that** the optical recording medium adopts the generally flat shape if the optical recording medium is clamped in the clamping area by a force of 0,3 to 5 N, in particular by a force of 0,5 to 2,5 N.

8. Optical recording medium according to one of claims 1 to 7, **characterized in that** the optical recording medium comprises a third ring (19) on a second side of the optical recording medium which extends at least in the inner section of the clamping area (14) of the optical recording medium.

9. Optical recording medium according to one of claims 1 to 7, **characterized in that** the optical recording medium comprises one or more third protrusions on a second side of the optical recording medium located in the inner section of the clamping area (14) of the optical recording medium.

10. Optical recording medium according to one of claims 1 to 8, **characterized in that** the optical recording medium comprises a fourth ring (20) on the second side of the optical recording medium which extends at least in the outer section of the clamping area (14) of the optical recording medium.

11. Optical recording medium according to one of claims 1 to 9, **characterized in that** the optical recording medium comprises one or more fourth protrusions on the second side of the optical recording medium located in the outer section of the clamping area (14) of the optical recording medium.

12. Optical recording medium according to one of the preceding claims, **characterized in that** the total thickness (T₂) of the optical recording medium in the outer section of the clamping area (14) is about 1.2 mm and/or **in that** the thickness (T₁) of the optical recording medium in an area outside of the clamping area is in the range between 0.4 to 0.7 mm.

13. System comprising a drive for reading an optical recording medium, and a clamping mechanism for clamping an optical recording medium, wherein the clamping mechanism has a defined clamping area, **characterized by** comprising an optical recording medium according to one of the preceding claims.

## Patentansprüche

1. Optisches Speichermedium umfassend ein Substrat (12) und eine Speicherschicht (13), die an einer Seite des Substrats (12) angeordnet ist, wobei das optische Speichermedium einen vorbestimmten Einspannbereich (14) aufweist, wobei der Einspannbereich (14) des optischen Speichermediums so geformt ist, um eine Verformung des optischen Speichermediums oder eine Spannung in zumindest einem Teil des optischen Speichermediums, der außerhalb des Einspannbereichs vorliegt, und die darin resultiert, dass das optische Speichermedium, das eine konisch geformte Oberfläche aufweist, eine im Allgemeinen flache Form annimmt, wenn es in eine Aufnahme- und/oder Reproduktionsvorrichtung eingespannt wird, **dadurch gekennzeichnet, dass**
ein erster Ring oder Vorsprünge (17), der/die in einem äußeren Bereich des Einspannbereichs angeordnet ist/sind, eine erste Höhe (T₃) aufweist/aufweisen und ein zweiter Ring oder Vorsprünge (18), der/die in einem inneren Bereich des Einspannbereichs angeordnet ist/sind, eine zweite Höhe (T₄) aufweist/aufweisen, wobei die erste Höhe (T₃) etwas höher ist, als die zweite Höhe (T₄).

2. Optisches Speichermedium gemäß Anspruch 1, **dadurch gekennzeichnet, dass** die Verformung oder Spannung im gesamten Bereich des optischen Speichermediums vorliegt, der außerhalb des Einspannbereichs (14) liegt.

3. Optisches Speichermediums gemäß einem der vorhergehenden Ansprüche, **dadurch gekennzeichnet, dass** die Verformung oder Spannung in einer Veränderung der relativen Position der äußeren Kanten (15) des optischen Speichermediums bezüglich des Einspannbereichs resultiert.

4. Optisches Speichermedium gemäß einem der vorhergehenden Ansprüche, **dadurch gekennzeichnet, dass** das optische Speichermedium eine Disk ist, die die allgemeine Form eines Kegels (16) aufweist, wenn das optische Speichermedium in einem nicht eingespannten Zustand ist, mit einem Winkel (α) zwischen einer Fläche des optischen Speichermediums und einer Ebene, die rechtwinklig zu der Achse (A) des optischen Speichermediums ist.

5. Optisches Speichermedium gemäß Anspruch 4, **dadurch gekennzeichnet, dass** der Winkel (α) verringert wird, wenn sich die Disk in einem eingespannten Zustand befindet.

6. Optisches Speichermedium gemäß der Ansprüche 4 oder 5, **dadurch gekennzeichnet, dass** der Winkel (α) größer als 0,5°, insbesondere im Bereich zwischen 0,8° und 3° ist, wenn sich das optische Speichermedium in einem nicht eingespannten Zustand befindet.

7. Optisches Speichermedium gemäß Anspruch 6, **dadurch gekennzeichnet, dass** das optische Speichermedium die Allgemeine flache Form annimmt, wenn das optische Speichermedium im Einspannbereich mit einer Kraft von 0,3 N bis 5 N, insbesondere durch eine Kraft von 0,5 N bis 2,5 N eingespannt ist.

8. Optisches Speichermedium gemäß einem der Ansprüche 1 bis 7, **dadurch gekennzeichnet, dass** das optische Speichermedium einen dritten Ring (19) an einer zweiten Seite des optischen Speichermediums umfasst, der sich zumindest in dem inneren Abschnitt des Einspannbereichs (14) des optischen Speichermediums erstreckt.

9. Optisches Speichermedium gemäß einem der Ansprüche 1 bis 7, **dadurch gekennzeichnet, dass** das optische Speichermedium einen oder mehrere dritte Vorsprünge an einer zweiten Seite des optischen Speichermediums umfasst, der/die im inneren Abschnitt des Einspannbereichs (14) des optischen Speichermediums angeordnet ist/sind.

10. Optisches Speichermedium gemäß einem der Ansprüche 1 bis 8, **dadurch gekennzeichnet, dass** das optische Speichermedium einen vierten Ring (20) an der zweiten Seite des optischen Speichermediums umfasst, der sich zumindest in dem äußeren Abschnitt des Einspannbereichs (14) des optischen Speichermediums erstreckt.

11. Optisches Speichermedium gemäß einem der Ansprüche 1 bis 9, **dadurch gekennzeichnet, dass** das optische Speichermedium eine oder mehrere vierte Vorsprünge auf der zweiten Seite des optischen Speichermediums umfasst, der/die in dem äußeren Abschnitt des Einspannbereichs (14) des optischen Speichermediums angeordnet ist/sind.

12. Optisches Speichermedium gemäß einem der vorhergehenden Ansprüche, **dadurch gekennzeichnet, dass** die Gesamtdicke (T₂) des optischen Speichermediums im äußeren Abschnitt des Einspannbereichs (14) ungefähr 1,2 mm ist und/oder dass die Dicke (T₁) des optischen Speichermediums in einem Bereich außerhalb des Einspannbereichs in einem Bereich zwischen 0,4 bis 0,7 mm ist.

13. System umfassend ein Laufwerk zum Lesen eines optischen Speichermediums und einen Einspannmechanismus zum Einspannen eines optischen Speichermediums, wobei der Einspannmechanismus einen definierten Einspannbereich aufweist, **gekennzeichnet durch** ein optisches Speichermedium gemäß einem der vorhergehenden Ansprüche.

## Revendications

1. Support d'enregistrement optique comprenant un substrat (12) et une couche d'enregistrement (13) disposée sur une face du substrat (12), dans lequel le support d'enregistrement optique a une surface de pincement prédéterminée (14), la surface de pincement (14) du support d'enregistrement optique est formée de manière à produire une déformation de, ou une tension dans, au moins une partie du support d'enregistrement optique qui est située hors de la surface de pincement et qui fait en sorte que le support d'enregistrement optique ayant une surface de forme conique adopte une forme généralement plate lorsqu'il est pincé à l'intérieur d'un appareil d'enregistrement et/ou de reproduction, **caractérisé en ce que** :
un premier anneau ou des saillies (17) se trouvant dans une section extérieure de la surface de pincement ayant une première hauteur (T3) et un second anneau ou des saillies se trouvant dans une section intérieure de la surface de pincement (18) ayant une seconde hauteur (T4), où la première hauteur (T3) est légèrement supérieure à la seconde hauteur (T4).

2. Support d'enregistrement optique selon la revendication 1, **caractérisé en ce que** la déformation ou tension est présente dans la totalité de la surface du support d'enregistrement optique qui est situé à l'extérieur de la surface de pincement (14).

3. Support d'enregistrement optique selon l'une des revendications précédentes, **caractérisé en ce que** la déformation ou tension produit une modification de la position relative des bords extérieurs (15) du support d'enregistrement optique par rapport à la surface de pincement.

4. Support d'enregistrement optique selon l'une des revendications précédentes, **caractérisé en ce que** le support d'enregistrement optique est un disque ayant la forme générale d'un cône (16) lorsque le support d'enregistrement optique est dans un état non pincé, avec un angle (α) entre une surface du support d'enregistrement optique et un plan qui est perpendiculaire à l'axe (A) du support d'enregistrement optique.

5. Support d'enregistrement optique selon la revendication 4, **caractérisé en ce que** l'angle (α) est réduit lorsque le disque est dans un état pincé.

6. Support d'enregistrement optique selon la revendication 4 ou 5, **caractérisé en ce que** l'angle (α) est supérieur à 0,5°, en particulier dans la plage comprise entre 0,8° et 3°, lorsque le support d'enregistrement optique est dans un état non-pincé.

7. Support d'enregistrement optique selon la revendication 6, **caractérisé en ce que** le support d'enregistrement optique adopte la forme généralement plate si le support d'enregistrement optique est pincé dans la surface de pincement par une force de 0,3 à 5 N, en particulier par une force de 0,5 à 2,5 N.

8. Support d'enregistrement optique selon l'une des revendications 1 à 7, **caractérisé en ce que** le support d'enregistrement optique comprend un troisième anneau (19) sur une seconde face du support d'enregistrement optique qui s'étend au moins dans la section intérieure de la surface de pincement (14) du support d'enregistrement optique.

9. Support d'enregistrement optique selon l'une des revendications 1 à 7, **caractérisé en ce que** le support d'enregistrement optique comprend une ou plusieurs troisièmes saillies sur une seconde face du support d'enregistrement optique situées dans la section intérieure de la surface de pincement (14) du support d'enregistrement optique.

10. Support d'enregistrement optique selon l'une des revendications 1 à 8, **caractérisé en ce que** le support d'enregistrement optique comprend un quatrième anneau (20) sur la seconde face du support d'enregistrement optique qui s'étend au moins dans la section extérieure de la surface de pincement (14) du support d'enregistrement optique.

11. Support d'enregistrement optique selon l'une des revendications 1 à 9, **caractérisé en ce que** le support d'enregistrement optique comprend une ou plusieurs quatrièmes saillies sur la seconde face du support d'enregistrement optique situées dans la section extérieure de la surface de pincement (14) du support d'enregistrement optique.

12. Un support d'enregistrement optique selon l'une des revendications précédentes, **caractérisé en ce que** l'épaisseur totale (T2) du support d'enregistrement optique dans la section extérieure de la surface de pincement (14) est d'environ 1,2 mm et/ou **en ce que** l'épaisseur (T1) du support d'enregistrement optique dans une surface extérieure à la surface de pincement est dans la plage comprise entre 0,4 et 0,7 mm.

13. Système comprenant un lecteur pour lire un support d'enregistrement optique, et un mécanisme de pincement pour pincer un support d'enregistrement optique, dans lequel le mécanisme de pincement a une surface de pincement définie, **caractérisé en ce qu'**il comprend un support d'enregistrement optique selon l'une des revendications précédentes.
